(19) Europäisches Patentamt
European Patent Office
Office européen des brevets

(11) EP 3 882 291 A1

(12) EUROPÄISCHE PATENTANMELDUNG

(43) Veröffentlichungstag:
**22.09.2021 Patentblatt 2021/38**

(21) Anmeldenummer: **21159815.6**

(22) Anmeldetag: **01.03.2021**

(51) Int Cl.:
***C08G 18/67*** *(2006.01)* ***C08G 18/76*** *(2006.01)*
***C08L 75/16*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.03.2020 DE 102020107313**

(71) Anmelder: **fischerwerke GmbH & Co. KG**
**72178 Waldachtal (DE)**

(72) Erfinder:
- **Vogel, Martin**
**79286 Glottertal (DE)**
- **Weinelt, Christian**
**79331 Teningen (DE)**

(74) Vertreter: **Suchy, Ulrich Johannes**
**fischerwerke GmbH & Co. KG**
**Gewerbliche Schutzrechte**
**Klaus-Fischer-Strasse 1**
**72178 Waldachtal (DE)**

# (54) KUNSTHARZ-BEFESTIGUNGSSYSTEME MIT EINEM MONOFUNKTIONELLEN REAKTIVVERDÜNNER, DEREN HERSTELLUNG UND VERWENDUNGEN

(57) Kunstharz-Befestigungssystem für die chemische Befestigungstechnik, welches ein radikalisch härtbares Kunstharz, das einen radikalisch härtbaren Reaktivverdünner umfasst, und einen Radikalinitiator beinhaltet, dadurch gekennzeichnet, dass es Glycerinformalmethacrylat als monofunktionellen Reaktivverdünner umfasst, und verwandte Erfindungsverkörperungen.

EP 3 882 291 A1

## Beschreibung

Die Erfindung betrifft einen durch radikalische Polymerisation härtbaren, monofunktionellen Reaktivverdünner für die chemische Befestigungstechnik, und dessen Verwendung in radikalisch härtenden Kunstharz-Befestigungssystemen, insbesondere zur Erniedrigung der Viskosität solcher Kunstharz-Befestigungssysteme. Weiterhin betrifft die Erfindung Kunstharz-Befestigungssysteme und Verfahren zur Herstellung der Kunstharz-Befestigungssysteme und/oder die Verwendung der Kunstharz-Befestigungssysteme, und/oder Verfahren unter deren Verwendung, jeweils zur Befestigung von beispielsweise Verankerungsmitteln (Verankerungselementen) in Löchern wie Bohrlöchern oder Spalten in Bausubstraten, wobei die radikalisch härtbaren Kunstharz-Befestigungssysteme den besagten monofunktionellen Reaktivverdünner beinhalten. Die bevorzugten konkreten und weiteren Erfindungsverkörperungen finden sich nachfolgend und in den Ansprüchen.

Die derzeit in der Praxis verwendeten radikalisch härtbaren Kunstharz-Befestigungssysteme basieren auf ungesättigten Polyestern, Vinylester(urethan)harzen und Epoxy(meth)acrylaten. Diese sind als Zwei- oder Mehrkomponentensysteme ausgebildet, wobei eine Komponente das Kunstharz (Komponente A) mit evtl. vorliegenden Reaktivverdünner(n) und eine weitere Komponente (Komponente B) das Härtungsmittel enthält. Zusätzlich können in den jeweiligen Komponenten weitere Bestandteile beinhaltet sein, wie zum Beispiel anorganische Füllmittel, Additive, Beschleuniger und Stabilisatoren. Durch Vermischen der beiden Komponenten härtet das Kunstharz-Befestigungssystem aus. Werden die Kunstharz-Befestigungssysteme zur Befestigung von Verankerungsmitteln in Bohrlöchern verwendet, erfolgt die Härtung in den dafür vorgesehenen Bohrlöchern oder Spalten.

Ein radikalisch härtbares Kunstharz-Befestigungssystem ist aus der DE 3940138 A1 bekannt. Die hier beschriebenen Kunstharze weisen jedoch verhältnismäßig hohe Viskositäten auf, wodurch ihre Anwendung als Befestigungssystem beschränkt wird.

Ein Kunstharz-Befestigungssystem muss robust ausgebildet werden, damit es unter Baustellenbedingungen fehlerfrei funktioniert. Die auf Baustellen vorherrschenden großen Temperaturunterschiede von beispielsweise - 25 °C bis + 45 °C können zu Problemen bei Befestigungssystemen führen, welche auf hochviskosen Kunstharzen basieren. Aus diesem Grund werden große Anforderungen an den Einsatzbereich, insbesondere den Einsatz in verschiedenen Temperaturbereichen, derartiger Kunstharz-Befestigungssysteme gestellt.

So sollte bei niedrigen Temperaturen eine ausreichend niedrige Viskosität des Kunstharzsystems beim Auspressen gewährleistet werden, da insbesondere unter Verwendung von Statikmischern eine niedrige Viskosität neben guter Auspressbarkeit für eine einwandfreie Vermischung der beiden Komponenten von Bedeutung ist. Bei hohen Temperaturen sollte das Kunstharzsystem eine ausreichend hohe Standfestigkeit aufweisen, damit es bei einer Überkopf-Montage nicht aus dem Bohrloch herausläuft.

Ein weiteres durch Temperaturschwankungen und auch damit einhergehende Temperaturgradienten im Bohrloch auftretendes Problem ist, dass die radikalische Polymerisation nicht einheitlich abläuft. Hierdurch weist das ausgehärtete Kunstharzsystem Inhomogenitäten auf, was sich in verringerten Lastwerten wiederspiegelt. So kann es bei niedrigen Temperaturen und den damit einhergehenden erhöhten Viskositäten zum vorzeitigen Erstarren des Kunstharzsystems kommen. Hierdurch können Abbruchreaktionen der radikalischen Polymerisation in höherem Maße ablaufen, wodurch der Umsatz der radikalischen Polymerisation wesentlich geringer ist und nur niedrigere Lastwerte erreicht werden.

Da sich Temperaturunterschiede auf Baustellen nicht vermeiden lassen, müssen Kunstharz-Befestigungssysteme sowohl bei hohen als auch bei niedrigen Temperaturen die Homogenität und die damit einhergehende Reproduzierbarkeit der Lastwerte gewährleisten.

Um die oben genannten Probleme zu überwinden, wird einerseits bei den gängigen Kunstharz-Befestigungssystemen der Anteil an Reaktivverdünnern erhöht. Dies führt bei niedrigen Temperaturen zu ausreichend niedrigen Viskositäten, um die oben angesprochenen Inhomogenitäten zu verhindern. Der Anteil an Reaktivverdünnern beträgt nicht selten 50 Gew.% bezogen auf das Kunstharz. Die Standfestigkeit bei hohen Temperaturen wird andererseits durch Zugabe von Thixotropiermittel erzielt.

Die Erhöhung des Reaktivverdünneranteils bringt jedoch auch einige Nachteile mit sich. So bedingt ein erhöhter Anteil an Reaktivverdünnern im Umkehrschluss eine Erniedrigung des hochviskosen Kunstharzanteils. Da das Kunstharz maßgebend für die Leistungsfähigkeit des Kunstharz-Befestigungssystems verantwortlich ist, ist ein erheblicher Nachteil darin zu sehen, dass hierdurch die Leistungsfähigkeit des ausgehärteten Befestigungssystem negativ beeinflusst wird.

Eine Erhöhung des Anteils an Reaktivverdünnern kann auch zu einem erhöhten "Schrumpf" des Kunstharz-Befestigungssystems führen. Die Hauptursache des Schrumpfens liegt darin, dass sich die Monomere von der *van-der-Waals-Distanz* zum *kovalenten* Abstand bewegen, wenn eine kovalente Bindung, wie im Falle einer radikalischen Polymerisation, gebildet wird. Üblicherweise weisen Reaktivverdünner ein geringes Molekulargewicht und eine hohe Funktionalität (hier: Anzahl an Doppelbindungen) und damit eine hohe Dichte von neu entstehenden kovalenten Bindungen auf, wodurch der Schrumpf bei Reaktivverdünnern besonders stark ausgeprägt sein kann. Das Resultat von erhöhtem Schrumpf ist eine verringerte Adhäsion des Kunstharzsystems zur Bohrlochwand, was wiederum die Leistungsfähigkeit

des Kunstharz-Befestigungssystem negativ beeinflussen kann.

Ein weiterer Nachteil ist, dass sich je nach Art des Reaktivverdünners der Anteil an flüchtigen organischen Verbindungen (VOC; Volatile Organic Compounds) in den Kunstharz-Befestigungssystemen erhöhen kann. Dies kann zu Ausdünstungen aus dem Kunstharz-Befestigungssystem und/oder der Kartusche und gegebenenfalls zu einem daraus resultierenden Leistungsabfall des ausgehärteten Befestigungssystems führen. Einige dieser Verbindungen können zudem auch gesundheitsgefährdend sein und/oder sind daher sogar kennzeichnungspflichtig.

Vor diesem Hintergrund besteht die Aufgabe der vorliegenden Erfindung darin, einen neuen monofunktionellen Reaktivverdünner für die chemische Befestigungstechnik bereit zu stellen, welcher aus dem Stand der Technik nicht bekannt ist und der die oben genannten Nachteile überwindet.

Überraschender Weise wurde gefunden, dass der neue Reaktivverdünner eine stärker ausgeprägte verdünnende Wirkung - auf die üblichen im Bereich der chemischen Befestigungstechnik verwendeten Kunstharze - aufweist, als die aus dem Stand der Technik bekannten Reaktivverdünner. So kann die Viskosität des hochviskosen Kunstharzes, welches maßgebend für die Leistungsfähigkeit verantwortlich ist, mit der gleichen Menge an neuem Reaktivverdünner deutlich stärker reduziert werden als mit den aus dem Stand der Technik bekannten Reaktivverdünnern, oder mit einer geringeren Menge dennoch gleich gehalten werden. Dies führt dazu, dass der Anteil an Reaktivverdünner, der erforderlich ist, um eine gewünschte Viskosität des Kunstharzsystems einzustellen, bei dem neuen Reaktivverdünner deutlich geringer gehalten werden kann und somit die oben beschriebenen Nachteile, die auf die Erhöhung des Reaktivverdünneranteils zurückzuführen sind, geringer ausfallen bzw. ganz ausbleiben.

In einer ersten Ausführungsform betrifft die Erfindung daher ein Kunstharz-Befestigungssystem für die chemische Befestigungstechnik, insbesondere für die Befestigung von Verankerungsmitteln in Löchern in Bausubstraten, welches ein radikalisch härtbares Kunstharz, das einen radikalisch härtbaren Reaktivverdünner umfasst, und einen Radikalinitiator beinhaltet, dadurch gekennzeichnet, dass es als Reaktivverdünner Glycerinformalmethacrylat beinhaltet.

Eine zweite Ausführungsform der Erfindung betrifft die Verwendung eines Kunstharz-Befestigungssystems wie vor- oder nachstehend beschrieben zur Befestigung eines Verankerungsmittel in einem Loch, wie einem Spalt oder insbesondere einem Bohrloch, in einem Bausubstrat.

Eine dritte Erfindungsverkörperung betrifft ein Verfahren zur Befestigung eines Verankerungsmittel in einem Loch, wie einem Spalt oder insbesondere einem Bohrloch, in einem Bausubstrat, umfassend die Verwendung gemäß dem vorstehenden Absatz oder wie nachstehend beschrieben.

Eine vierte Ausführungsform der Erfindung betrifft die Verwendung von Glycerinformalmethacrylat als Reaktivverdünner in einem Kunstharz-Befestigungssystem für die chemische Befestigungstechnik, wobei das Kunstharz-Befestigungssystem ein radikalisch härtbares Kunstharz und einen Radikalinitiator beinhaltet.

Eine fünfte Ausführungsform der Erfindung betrifft die Verwendung von Glycerinformalmethacrylat als Reaktivverdünner zur Verringerung der Viskosität eines radikalisch härtbaren Kunstharzes für die chemische Befestigungstechnik oder zur Verringerung der Viskosität eines radikalisch härtbaren Kunstharz-Befestigungssystems, wobei das radikalisch härtbare Kunstharz-Befestigungssystem ein radikalisch härtbares Kunstharz und einen Radikalinitiator beinhaltet.

Auch der neue Reaktivverdünner zur Anwendung in einem erfindungsgemäßen Kunstharz-Befestigungssystem bildet einen Erfindungsgegenstand.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was jeweils besondere Ausführungsformen der Erfindung darstellt.

Unter "unter radikalischer Polymerisation härtbar" oder "radikalisch härtbar" ist zu verstehen, dass die entsprechenden Kunstharze bzw. Kunstharz-Befestigungssysteme bei der Verwendung unter radikalischer Kettenpolymerisation aushärten. "Radikalisch härtbar" kann auch durch "radikalisch polymerisierbar" ersetzt werden.

Wo "ein" oder "eine" verwendet wird, ist dies (sofern nicht anders, beispielsweise durch Voranstellen von "mindestens", ersichtlich) in erster Linie als der unbestimmte Artikel zu verstehen und beinhaltet "ein (in Zahlen: 1) oder mehrere" wie auch nur ein(e) (in Zahlen: 1). Anders ausgedrückt, bedeutet "ein" oder "eine" "ein(e) oder mehr, z.B. zwei oder drei oder vier". "Mindestens ein" steht für ein oder mehrere. Wo der Plural verwendet wird (z.B. "Doppelbindungen", "Heteroatome" etc.), schließt dies auch den Singular ("Doppelbindung", "Heteroatom" etc.) ein.

Vor- und nachstehend bedeuten Anteils- oder Gehaltsangaben in Prozent jeweils Gewichtsprozent ("Gew.-%") oder den relativen Gewichtsanteil, soweit nicht anders angegeben, bezogen auf alle Inhaltsstoffe eines erfindungsgemäßen Kunstharz-Befestigungssystems (ohne Verpackungsmaterial), wenn nicht anders angegeben oder ersichtlich.

"Beinhalten" oder "umfassen" bedeutet, dass neben den genannten Bestandteilen oder Komponenten oder Merkmalen noch andere vorhanden sein können, steht also für eine nicht abschließende Aufzählung, im Gegensatz zu "bestehen aus", dass eine abschließende Aufzählung der bei seiner Verwendung aufgezählten Bestandteile/Komponenten/Merkmale bedeutet. Vorzugsweise kann anstelle von "beinhalten" ""bestehen aus" eingesetzt werden.

Wo das Attribut "ferner" erwähnt wird, bedeutet dies, dass Merkmale ohne dieses Attribut stärker bevorzugt sind.

"Und/oder" bedeutet, dass die genannten Merkmale/Substanzen jeweils alleine oder in Kombination von zwei oder mehr der jeweils genannten Merkmale/Substanzen vorliegen können.

Wo "(Meth)acrylate" oder "(meth)acrylate" erwähnt werden, bedeutet dies Acrylate, Methacrylate oder Mischungen davon.

Glycerinformalmethacrylat, ein monofunktioneller Reaktivverdünner, nachfolgend auch als GLYFOMA bezeichnet, in Anlehnung an den Markennamen "VISIOMER®GLYFOMA" der Firma Evonik, ist ein Umsetzungsprodukt der Acylierung von Glycerinformal (einer bei Raumtemperatur flüssigen Gleichgewichtsmischung von 5-Hydroxy-1,3-dioxan und 4-Hydroxymethyl-1,3-dioxolan) mit Methacrylsäure oder deren reaktiven Derivaten (z.B. dem Anhydrid). GLYFOMA ist als "VISIOMER®GLYFOMA von Evonik erhältlich. Es handelt sich um eine Mischung folgender Isomerer:

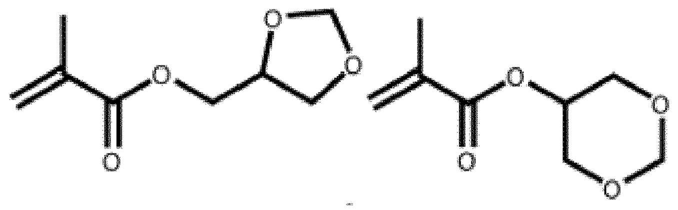

Glycerinformalmethacrylat liegt in einem erfindungsgemäßen Kunstharz-Befestigungssystem vorzugsweise in einem Anteil von 0,1 bis 70, insbesondere von 1 bis 60, vorzugsweise von 1 bis 55 Gew.-%, oder vorteilhaft von 3 bis 55 Gew.-%, vor.

Das Glycerinformalmethacrylat wird in einem erfindungsgemäßen Verfahren zur Herstellung einer den monofunktionalen Reaktivverdünner gemäß der Erfindung beinhaltenden Kunstharzkomponente des Kunstharz-Befestigungssystems einem Reaktiv-Kunstharz während dessen Synthese und/oder danach, beispielsweise auch erst bei der Formulierung einer Kunstharzkomponente des Kunstharz-Befestigungssystems, zugesetzt.

Bei einem radikalisch härtbaren Kunstharz handelt es sich in erster Linie um eine nichtaromatische ungesättigte Gruppen (Doppelbindungen) beinhaltende Verbindung, vorzugsweise um ein radikalisch härtbares ungesättigtes Reaktionsharz (Reaktivharz) mit bevorzugt mindestens 2 oder mehr reaktiven nichtaromatischen ungesättigten Bindungen, oder eine Mischung von zwei oder mehr solchen Reaktionsharzen.

Besonders geeignet ist die Gruppe der ethylenisch ungesättigten Verbindungen, die Styrol und Derivate; Vinylester, wie (Meth)Acrylate, Urethan(meth)acrylate oder Itaconate, oder Epoxy(meth)acrylate; ferner ungesättigte Polyester, Vinylether, Allylether, Dicyclopentadien-Verbindungen und ungesättigte Fette, umfasst.

Besonders bevorzugt sind vor allem ein oder mehrere solche Kunstharze (Reaktivharze), die (radikalisch) härtbare Ester mit ein oder mehreren ungesättigten Carbonsäureresten (wie beispielsweise in DE 10 2014 103 923 A1 beschrieben) umfassen; vorzugsweise jeweils propoxylierte oder insbesondere ethoxylierte aromatische Diol-, wie Bisphenol-A-, Bisphenol-F- oder Novolak-(insbesondere di-) (meth)acrylate; Epoxy(meth)acrylate, insbesondere in Form von Umsetzungs-produkten von Di- oder Polyepoxiden, z.B. Bisphenol-A-, Bisphenol-F- oder Novolak-di- und/ oder-poly-glycidylethern, mit ungesättigten Carbonsäuren, z.B. $C_2$-$C_7$-Alkencarbonsäuren, wie insbesondere (Meth)acrylsäure; Urethan- und/oder Harnstoff-(meth)acrylate - insbesondere Urethan(meth)acrylate, die z.B. durch Umsetzung von Di- und/ oder Polyisocyanaten (höherfunktionelle Isocyanate) mit geeigneten (Meth)Acrylverbindungen (wie z.B.: Hydroxyethyl- oder Hydroxypropylmethacrylat), gegebenenfalls unter Mitwirkung von Hydroxyverbindungen, die mindestens zwei Hydroxylgruppen enthalten, wie sie beispielsweise in der DE 39 40 309 A1 und/oder DE 4111828 A1 beschrieben sind, erhalten werden; oder ungesättigte Polyester¬harze, oder dergleichen, oder zwei oder mehr dieser härtbaren ungesättigten organischen Komponenten.

Bevorzugt handelt es sich um radikalisch härtbare Kunstharze auf Urethan(meth)acrylatbasis.

Beispiele für in besonderen und bevorzugten Ausführungsformen der Erfindung vorhandene bzw. verwendete Urethan(meth)acrylate in radikalisch härtbaren Kunstharzen auf Urethanmethacrylatbasis ("Vinylesterurethane") in erfindungsgemäßen Kunstharz-Befestigungssystemen sind solche, die einerseits aus der Umsetzung eines vorverlängerten monomeren Di- oder Polyisocyanats und/oder andererseits aus der Umsetzung eines polymeren Di- oder Polyisocyanats (z.B.: PMDI, MDI) mit Hydroxyalkyl(meth)acrylat, wie Hydroxyethyl- oder Hydroxypropyl(meth)acrylat, resultieren. Die Art und Weise zur Durchführung von Vorverlängerungsreaktionen und die Vielzahl der Vorverlängerungsreaktionsmöglichkeiten sind dem Fachmann bekannt und werden hier nicht alle explizit beschrieben. Es sei hier beispielhaft auf die Anmeldungen EP 0508183 A1 und EP 0432087 A1 verwiesen.

Eine besondere Ausführungsform betrifft solche Urethan(meth)acrylatharze, die nach dem nachfolgend kurz skizzierten Verfahren oder wie in den Beispielen beschrieben hergestellt werden:
Es handelt sich um Verfahren zur Herstellung von Vinylesterurethanharzen, insbesondere Urethan(meth)acrylat-Harzen (nachfolgend auch U(M)A-Harze), welches dadurch gekennzeichnet ist, dass als Edukt für die Herstellung des Vinylesterurethan-, insbesondere U(M)A-Harzes ein Isocyanat mit einer mittleren Funktionalität von 2 oder niedriger oder insbesondere mehr als 2 (die auch durch Mischung von Isocyanaten einer Funktionalität unter zwei mit Isocyanaten einer Funktionalität größer 2 erzielt werden kann), beispielsweise von 2,0 oder insbesondere 2,1 bis 5, zum Beispiel von 2,2 bis 4, vorteilhaft z.B. von 2,3 bis 3,5, mit einem mindestens eine C-C-Doppelbindung (nicht konjugierte - olefinische Bindung) aufweisenden aliphatischen Alkohol, insbesondere einem Hydroxyalkyl(meth)acrylat, vorzugsweise Hydroxyniederalkyl(meth)acrylat, wie Hydroxyethyl(meth)acrylat oder Glycerindimethacrylat oder insbesondere Hydroxypropyl(meth)acrylat, vorzugsweise 2-Hydroxypropylmethacrylat (HPMA), umgesetzt wird. Das technisch verfügbare HPMA ist dabei als eine Mischung aus 2-Hydroxypropylmethacrylat und Hydroxyisopropylmethacrylat zu sehen, - auch andere eine olefinische Bindung aufweisende aliphatische Alkohole können als technische Isomerengemische oder als reine Isomere vorliegen. Bei Verwendung eines HPMA-Überschusses kann das überschüssige HPMA zusätzlich als Reaktivverdünner wirken.

Unter einem Isocyanat mit einer mittleren Funktionalität von weniger als 2 oder 2 oder insbesondere mehr als 2, beispielsweise von 2,1 bis 5, zum Beispiel von 2,2 bis 4, vorteilhaft z.B. von 2,3 bis 3,5, ist beispielsweise ein Polyisocyanat mit Uretdion-, Isocyanurat-, Iminooxadiazinon-, Uretonimin-, Biuret-, Allophanat- und/oder Carbodiimid-Strukturen (vorteilhaft mit einer Molekulargewichtsverteilung derart, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanten zusammengesetzt sind (siehe genauer Polymerdefinition nach REACH)) oder vorzugsweise eine (z.B. in technischen Herstellprozessen typischerweise anfallende oder nachfolgend gezielt (z.B. durch Zugabe und/oder Abdestillation von Monomeren oder Monomerenmischungen) eingestellte) Mischung von (i) ein oder mehreren monomeren Mono- oder insbesondere Diisocyanaten, wie Diphenylmethandiisocyanat (MDI), insbesondere 4,4'-Diphenylmethyldiisocyanat oder 2,2'-Diphenylmethandiisocyanat oder Mischungen von Diphenylmethandiisocyanat-Isomeren (mit unterschiedlichen Positionen der Isocyanatgruppen an den Phenylkernen) wie den gerade genannten, mit (ii) ein oder mehreren "polymeren" Diphenylmethandiisocyanaten (PMDI), das heißt vorzugsweise Roh-MDI (Rohprodukt der industriellen Herstellung von MDI ohne Trennung der einzelnen Isomeren z.B. durch Destillation) mit (d.h. beinhaltend) mehreren Isomeren und höherfunktionellen Homologen und z.B. einem mittleren Molekulargewicht in der Größenordnung von 200 bis 800 g/mol und einer Funktionalität wie oben angegeben, z.B. mit einem mittleren Molekulargewicht von 280 bis 500, z.B. 310 bis 480 und einer Funktionalität von 2,4 bis 3,4, z.B. von 3,2. Bevorzugt sind marktübliche PMDI, die aus dem Roh-MDI selbst oder auch aus dem Roh-MDI z.B. durch Abdestillation und/oder Zugabe von monomerem MDI erhalten werden und ein mittleres Molekulargewicht von 310-450 aufweisen und auch Uretdion-, Isocyanurat-, Iminooxadiazinon-, Uretonimin-, Biuret-, Allophanat- und/oder Carbodiimid-Strukturen beinhalten können. Besonders bevorzugt ist marktübliches PMDI mit einer Molekulargewichtsverteilung derart, dass keine einzelne Molekülspezies zu mehr als 50 Gew.-% vorliegt.

Unter "Funktionalität" ist die Anzahl der Isocyanatgruppen pro Molekül zu verstehen, bei Diphenylmethandiisocyanat ist diese Funkionalität (im Wesentlichen, d.h. von verunreinigungsbedingten Abweichungen abgesehen) 2, bei den PMDI handelt es sich um eine (in der Regel vom Hersteller angegebene) mittlere Funktionalität, die gemäß der Formel

$$f = \frac{\sum n_i \cdot f_i}{\ }$$

($f$ = Funktionalität, $n_i$ = Zahl der Moleküle einer Funktionalität $f_i$,)
errechnet werden kann und vorzugsweise zwischen unter 2 oder 2 oder besonders bevorzugt über 2, beispielsweise 2,1 und 5,0 oder in den Bereichen wie oben angegeben liegt.

Das Verfahren zur Herstellung von Urethan(meth)acrylat-Harzen findet vorzugsweise in Gegenwart von einem Katalysator statt, wobei entsprechende Katalysatoren, die die Reaktion zwischen Hydroxylgruppen und Isocyanatgruppen katalysieren, dem Fachmann hinreichend bekannt sind, beispielsweise einem tertiären Amin, wie 1,2-Dimethylimidazol, Diazabicyclooctan, Diazabicyclononan, , oder einer Organometallverbindung (z.B. von K, Sn, Pb, Bi, Al und insbesondere auch von Übergangsmetallen wie Ti, Zr, Fe, Zn, Cu); sowie Mischungen von zwei oder mehr davon; beispielsweise (bezogen auf die Reaktionsmischung) in einem Anteil von 0,001 bis 2,5 Gew.-%; vorzugsweise in Gegenwart von *Stabilisatoren* (Inhibitoren), wie beispielsweise Phenothiazin, TEMPO, TEMPOL, Hydrochinon, Dimethylhydrochinon, Triphenylphosphit, tert.-Butylhydrochinon, Hydrochinonmonoethylether, tert.-Butylbrenzkatechin und/oder p-Benzochinon, sowie Mischungen von zwei oder mehr davon; z.B. in einer Menge von 0,0001 bis 2,5 Gew.-%, bezogen auf die Reaktionsmischung, bei bevorzugten Temperaturen z.B. im Bereich von 0 bis 120 °C, vorteilhaft von 50 bis 95 (oder bis 80) °C.

Beispiele für geeignete Katalysatoren und Stabilisatoren sind dem Fachmann bekannt, beispielsweise wie aus "Polyurethane Kunststoff-Handbuch 7" von Becker, G.W.; Braun, D.; Oertel, G., 3. Auflage, Carl Hanser Verlag, 1993,

ersichtlich.

Die Reaktion kann ohne Lösungsmittel (der mindestens eine C-C-Doppelbindung aufweisende aliphatische Alkohol, insbesondere das Hydroxy(nieder)alkyl(meth)acrylat selbst dient dann als Lösungsmittel) oder in Gegenwart eines geeigneten Lösungsmittels durchgeführt werden, beispielsweise eines weiteren Reaktivverdünners. "Reaktiv" bezieht sich dabei hier auf die Formulierung des Klebemittels und dessen Aushärtung, nicht auf die Addition des Alkohols an das Isocyanat.

Die Reaktion kann auch derart geführt werden, dass über eine Vorverlängerung ein Präpolymer gebildet und erst danach die noch übrigen Isocyanatgruppen mit dem mindestens eine C-C-Doppelbindung aufweisende aliphatische Alkohol, insbesondere dem Hydroxy(nieder)-alkyl(meth)acrylat, wie oben oder unten beschrieben umsetzt.

Für die Herstellung des Präpolymeren finden dabei zum Erzielen einer mittleren Isocyanat-Funktionalität von zwei oder insbesondere größer als zwei die oben genannten Isocyanate und Polyole mit zwei oder mehr Hydroxygruppen pro Molekül und/oder Polyamine mit zwei oder mehr Aminogruppen pro Molekül oder Aminole mit zwei oder mehr Amino- und Hydroxygruppen pro Molekül Verwendung, oder es werden Isocyanate mit einer Funktionalität von 2 mit Polyolen, Polyaminen oder Aminolen mit einer mittleren OH- und/ oder Amino-Funktionalität von mehr als 2 eingesetzt.

Polyole (Di- oder höherfunktionale Alkohole) sind dabei insbesondere zwei- oder höherfunktionale Alkohole, z.B. Folgeprodukte des Ethylen- oder Propylenoxids, wie Ethandiol, Di- bzw. Triethylenglykol, Propan-1,2- oder-1-3-diol, Dipropylenglykol, andere Diole, wie 1,2-, 1,3- oder 1,4-Butandiol, 1,6-Hexandiol, Neopentylglykol, 2-Ethylpropan-1,3-diol oder 2,2-Bis(4-hydroxycyclohexyl)-propan, Triethanolamin, Bisphenol A oder Bisphenol F oder deren Oxyethylierungs-, Hydrierungs- und/oder Halogenierungsprodukte, höherwertige Alkohole, wie z.B. Glycerin, Trimethylolpropan, Hexantriol und Pentaerythrit, hydroxylgruppenhaltige Polyether, z.B. Oligomere aliphatischer oder aromatischer Oxirane und/ oder höherer cyclischer Ether, z.B. Ethylenoxid, Propylenoxid, Styroloxid und Furan, Polyether mit jeweils endständigem Hydroxy, die in der Hauptkette aromatische Struktureinheiten enthalten, z.B. die des Bisphenol A bzw. F, hydroxylgruppenhaltige Polyester auf der Basis der oben genannten Alkohole bzw. Polyether und Dicarbonsäuren bzw. ihrer Anhydride, z.B. Adipinsäure, Phthalsäure, Isophthalsäure, Terephthalsäure, Tetra- bzw. Hexahydrophthalsäure, Endomethylentetrahydrophthalsäure, Maleinsäure, Fumarsäure, Itaconsäure, Sebacinsäure oder dergleichen. Besonders bevorzugt sind Hydroxylverbindungen mit Kettenversteifung bewirkenden aromatischen Struktureinheiten, Hydroxyverbindungen mit ungesättigten Komponenten zur Erhöhung der Vernetzungsdichte, wie Fumarsäure, oder verzweigte oder sternförmige Hydroxyverbindungen, insbesondere drei-bzw. höherfunktionale Alkohole und/ oder Polyether bzw. Polyester, die deren Struktureinheiten enthalten. Besonders bevorzugt sind Niederalkandiole (ergeben divalente Reste -O-Niederalkylen-O-).

Aminole (Aminoalkohole) sind Verbindungen, die insbesondere eine oder mehrere Hydroxy- und eine oder mehrere Aminogruppen in ein und demselben Molekül enthalten. Bevorzugte Beispiele sind aliphatische Aminole, insbesondere Hydroxyniederalkylamine (ergeben Reste -NH-Niederalkylen-O- oder-O-Niederalkylen-NH-), wie Ethanolamin, Diethanolamin oder 3-Aminopropanol, oder aromatische Aminole, wie 2-, 3- oder 4-Aminophenol.

Polyamine (Di- oder höherfunktionale Amine) sind organische Aminoverbindungen mit 2 oder mehr Aminogruppen, insbesondere Hydrazin, N,N'-Dimethylhydrazin, aliphatische Di- oder Polyamine, insbesondere Niederalkandiamine (ergeben Reste -NH-Niederalkyl-NH-), wie Ethylendiamin, 1,3-Diaminopropan, Tetra- oder Hexamethylendiamin oder Diethylentriamin, oder aromatische Di- oder Polyamine, wie Phenylendiamin, 2,4- und 2,6-Toluoldiamin, oder 4,4'-Diaminodiphenylmethan, Polyetherdiamine (Polyethylenoxide mit endständigen Aminogruppen) oder Polyphenyl/Polymethylen-polyamine, die durch Kondensation von Anilinen mit Formaldehyd erhältlich sind.

Das Verhältnis von freien Isocyanatgruppen des oder der Isocyanate zu Hydroxygruppen des oder der Hydroxyniederalkyl(meth)acrylate wird vorteilhaft derart gewählt, dass eine schnelle und vollständige Umsetzung der Isocyanatgruppen resultiert, das heißt, die Mol-menge der Hydroxygruppen (und damit die korrelierende Mol-Menge an Hydroxyniedera-lkyl(meth)acrylat) ist größer als die Mol-Menge der Isocyanatgruppen, z.B. 1,03 bis 5-mal so groß, wie z.B. 1,05 bis 4 mal so groß oder 1,1 bis 3 mal so groß . Überschüssiges Hydroxy-niederalkyl(meth)acrylat dient als Reaktivverdünner.

Die mittels des Verfahrens erhältlichen U(M)A-Harze sind solche, die erfindungsgemäß verwendbare bzw. vorhandene Urethan(meth)acrylatharze darstellen in den Reaktiv-Kunstharzen auf Urethan(meth)acrylatbasis.

"Auf Urethan(meth)acrylatbasis" bedeutet insbesondere, dass die erfindungsgemäßen Kunstharz-Befestigungssysteme neben den bisher genannten Bestandteile auch weitere übliche Bestandteile (z.B. Additive oder andere oben oder unten genannte Bestandteile) beinhalten können. Diese weiteren Bestandteile können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Bestandteile möglich. Vorzugsweise ist als einziges radikalisch härtbares Kunstharz (Reaktivharz) ein Urethanmethacrylat wie vorstehend beschrieben vorhanden.

Beispiele für weitere Inhaltsstoffe (Zusätze) von Reaktiv-Kunstharzen, insbesondere auf Urethan(meth)acrylatbasis, bzw. diese beinhaltenden Kunstharz-Befestigungssystemen sind hier metallsalzbasierte oder vorzugsweise aminische Beschleuniger, Inhibitoren, nicht reaktive Verdünner, reaktive Verdünner, Thixotropiermittel, Füllstoffe und/oder weitere Additive, oder Mischungen von zwei oder mehr dieser Inhaltsstoffe.

Als metallsalzbasierte Beschleuniger kommen Cu-, Co-, Mn-, Sn- oder Ce-Salze, wie z.B. Kupferoktanoat, in Frage. Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem oder propoxyliertem Toluidin, Anilin oder Xylidin, beispielsweise N,N-bis(hydroxypropyl- oder hydroxyethyl)-toluidinen oder Dipropoxy-p-toluidin oder-xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, ferner Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxy-benzyl)-benzol, (nicht-alkylierte oder alkylierte) Brenzcatechine wie tert.-Butylbrenzcatechin, 3,5-Di-tert-butyl-1,2-benzoldiol oder, oder insbesondere 4-Methoxyphenol, oder Gemische von zwei oder mehr davon, in Frage. Diese haben vorzugsweise einen Anteil von bis zu 1 Gew.-%, insbesondere falls vorhanden zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beein-flussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetramethylpiperidin-4-ol ("4-OH-TEMPO" oder "TEMPOL"). Der Gewichtsanteil der nicht-phenolischen Inhibitoren liegt (falls vorhanden) vorzugsweise, bezogen auf die Reaktionsharzformulierung, im Bereich von 1 ppm (Gew. bezogen) bis 2 Gew.-%, insbesondere z.B. im Bereich von 5 ppm bis 1 Gew.-%.

Als nicht reaktive Verdünner können beispielsweise Pflanzenöle, wie Rizinusöl, oder ferner Bioalkohole und Fettsäuren und deren Ester zugesetzt werden, oder Gemische von zwei oder mehr davon, beispielsweise in einem Anteil von 3 bis 60 Gew.-%, z.B. von 4 bis 55 Gew.-%.

Als Thixotropiermittel können übliche thixotropieverursachende Rheologiehilfsmittel verwendet werden, wie pyrogene Kieselsäure oder (z.B. mit Silanen) oberflächenbehandelte Kieselsäure. Sie können z.B. in einem Gewichtsanteil von 0,01 bis 50 Gew.-%, beispielsweise von 0,5 bis 20 Gew.-%, zugesetzt werden.

Als Füllstoffe können übliche Füllstoffe mit größerem Mittelkorn, insbesondere Kreiden, Gips, Branntkalk, Sand, wie Quarzsand, Quarzmehl, Korund, Glas (auch als Hohlkugeln), Porzellan, Keramik, Silikate, Tone oder Schwerspat, die als Pulver in körniger Form oder in Form von Formkörpern zugesetzt sein können, beinhaltet sein, oder andere, wie Kern- oder Schalenmehle aus Pflanzen, was den biogenen Kohlenstoffanteil erhöht, wie Olivenkernmehl, Kokosnussschalenmehl oder ferner Walnussschalenmehl, oder Gemische von zwei oder mehr davon, wobei die Füllstoffe ferner oder insbesondere auch silanisiert sein können. Die Füllstoffe können in einer oder in mehreren Komponenten eines erfindungsgemäßen mehrkomponentigen Kunstharz-Befestigungssystem, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 50 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann). Zusätzlich oder alternativ zu ein oder mehreren der genannten Füllstoffe können ferner hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Füllstoffe können in einer oder bei Mehrkomponentenzusammensetzungen in mehreren Komponenten eines erfindungsgemäßen Kunstharz-Befestigungssystems, beispielsweise in Form eines Mehrkomponentenkits (insbesondere Zweikomponentenkits), enthalten sein. Ihr Anteil beträgt vorzugsweise 0 bis 80 Gew.-%, insbesondere 5 bis 80, z.B. 40 bis 70 Gew.-%.

Auch weitere Additive können zugesetzt sein, wie nicht reaktive Verdünnungsmittel, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder ferner Weichmacher, oder Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Als "reaktive Verdünner" können ferner zusätzlich zu GLYFOMA auch ein oder mehrere radikalisch härtende ungesättigte Reaktivverdünner in biogener oder nicht-biogener Form zugesetzt sein, worunter in erster Linie solche zu verstehen sind, die als radikalisch aushärtende (was "(z.B. vor Härterzugabe) aushärtbar" einschließt) Komponenten

organische Verbindungen mit ungesättigten (z.B. olefinischen) Resten beinhalten oder insbesondere aus solchen Verbindungen bestehen, z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate (einschließlich Hydroxyniederalkyl(meth)acrylaten, die auch aus der erfindungsgemäßen U(M)A-Harzherstellung bereits bei Überschuss als Reaktivverdünner beinhaltet sein können, wie Hydroxypropyl(meth)acrylat oder Hydroxy-ethyl(meth)acrylat, Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi-(meth)acrylat, Butandioldi(meth)acrylat, wie 1,3- oder insbesondere 1,4-Butandioldi(meth)-acrylat, Hexandioldi(meth)acrylat, 1,10-Decandioldi(meth)acrylat, Diethylglykol-di(meth)-acrylat, besonders bevorzugt Oligoalkylenglykoldi(meth)acrylate, wie in DE 10 2014 109355 A1 beschrieben, die hier durch Bezugnahme aufgenommen wird, Trimethylolpropan-tri(meth)acrylat, Glycerintri(meth)acrylat, Polyglycerinpoly(meth)acrylat, Polyethylenglykol-di(meth)acrylat, Cycloalkyl-, Bicycloalkyl- oder Heterocyclyl(meth)acrylate, worin Cycloalkyl oder Bicycloalkyl ferner substituiert sein kann und 5 bis 7 Ringkohlenstoffatome aufweist und Heterocyclyl 5 oder 6 Ringatome hat, ferner Substituenten tragen kann und 1 oder 2 Ringheteroatome ausgewählt aus N, O und S aufweist, wie Tetrahydrofurfuryl(meth)acrylat oder Isobornyl(meth)acrylat, oder Acetacetoxyalkyl(meth)acrylat; oder ferner Styrole, wie Styrol, $\alpha$-Methylstyrol, Vinyltoluol, tert.-Butylstyrol und/oder Divinylbenzol; oder Gemische von zwei oder mehr davon, beispielsweise (falls vorhanden) in einem Gewichtsanteil von 0,1 bis 90 Gew.-%, z.B. zwischen 10 und 80 Gew.-%, 30 bis 70 Gew.% oder 40 bis 60 Gew.-%, jeweils bezogen auf das Gesamtgewicht der Mischung aus Kunstharz und Reaktivverdünner ohne Füllstoffe, aber ggf. mit anderen Zusätzen.

Bei den erwähnten radikalisch härtbaren Oligoalkylenglykoldi(meth)acrylaten handelt es sich insbesondere um solche der Formel I,

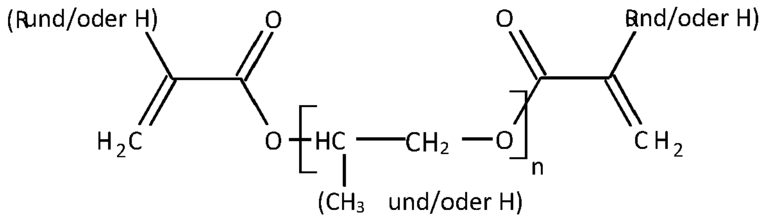

(I)

worin die Reste R unabhängig voneinander für $C_1$-$C_7$-Alkyl stehen, insbesondere für Methyl, und worin n für durchschnittlich 2,5 bis 13, vorzugsweise für 3,5 bis 10, insbesondere für 4 bis 8 und vor allem für 4,2 bis 7, insbesondere für 4,5 und 6 steht.

Beispiele für entsprechende Verbindungen sind insbesondere Triethylenglykoldi(meth)acrylat (TIEGDMA), Tetraethylenglykoldi(meth)acrylat (TTEGDMA), Polyethylenglykol200-Di(meth)acrylat (PEG200DMA) (Mittelwert n $\approx$ 4,5) (am stärksten bevorzugt), Polyethylenglykol400-Di(meth)acrylat (PEG400DMA) (Mittelwert n = 9), ferner Polyethylenglykol600-Di(meth)acrylat (PEG600DMA) (Mittelwert n = 13).

Der Härter beinhaltet mindestens ein Peroxid als eigentlichen Initiator. Der Begriff "Härter" bedeutet dabei vorzugsweise vor- und nachstehend reine Initiatoren oder phlegmatisierte Initiatoren mit oder ohne Füllstoffzusatz und/oder weitere Zusätze, wie Wasser, Verdickungsmittel und/oder weitere Zusatzstoffe, wie Farbstoffe, Additive und dergleichen, mit anderen Worten, eine komplette Härterkomponente. Zur Phlegmatisierung können übliche Zusätze, wie Gips, Kreide, pyrogene Kieselsäure, Phthalate, Chlorparaffin oder dergleichen, zugesetzt sein. Daneben können auch noch Füllstoffe und/ oder (insbesondere zur Herstellung einer Paste oder Emulsion) Lösungsmittel, insbesondere Wasser, Verdickungsmittel, Füllstoffe (wie z.B. oben genannt) und weitere der oben genannten Zusätze zugesetzt sein. Der Anteil aller Zusätze kann beispielsweise bei einem Gewichtsanteil von insgesamt 0,1 bis 70 Gew.-%, z.B. von 1 bis 40 Gew.-%, liegen.

Bezogen auf die Härterkomponente liegt der Anteil des Initiators in einer möglichen bevorzugten Ausführungsform der Erfindung bei 0,5 bis 90 Gew.-%, insbesondere bei 0,9 bis 30 Gew.-%. In einer besonders bevorzugten Ausführungsform liegt der Anteil des Initiators bezogen auf die Härterkomponente und/oder das Gesamtsystem bei < 1 %.

Als Initiator für die Härtung der erfindungsgemäßen Kunstharz-Befestigungssysteme finden im Falle der radikalischen Polymerisation beispielsweise radikalbildende Peroxide, z.B. organische Peroxide, wie Diacylperoxide, z.B. Dibenzoylperoxid, Ketonperoxide, wie Methylethylketonperoxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäßen Kunstharz-Befestigungssystem insgesamt liegt dabei vorzugsweise in einem Bereich von 1 bis 60 Gew.-%, z.B. 2 bis 50 Gew.-%.

Alternativ kann für die Härtung der erfindungsgemäßen Reaktiv-Kunstharzformulierungen ein Thiolbasiertes

Härtersystem gemäß der Patentanmeldung DE 10 2013 114 061 A1 oder ein auf CH-aciden Verbindungen basiertes System wie in DE 10 2015 003 221 A1 beschrieben verwendet werden, die hier diesbezüglich durch Bezugnahme aufgenommen werden. Ein weiteres Härtersystem (Initiatorsystem) umfassend mindestens einen mindestens einen Aktivator in Form eines Metallsalzes und als Radikalstarter einen solchen auf der Basis von Aldehyden oder Ketonen jeweils in Kombination mit Aminen, oder auf der Basis von Aldiminen oder Ketiminen, findet sich in WO2016/206777 A1, die hier ebenfalls durch Bezugnahme aufgenommen wird.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden ist, beispielsweise ein Bohrloch.

In einer besonderen und vorteilhaften Ausführungsform der Erfindung sind die härtbaren Komponenten (Reaktivharz) und die zugehörigen Härter (Härterkomponente) eines erfindungsgemäßen Kunstharz-Befestigungssystems voneinander getrennt in einem Zwei- oder ferner Mehrkomponentensystem oder -kit aufbewahrt, bevor sie im Verwendungsfall am gewünschten Ort (z.B. bei oder in einem Loch oder Spalt, wie Bohrloch) miteinander vermischt werden.

Unter einem Mehrkomponentenkit ist insbesondere ein Zwei- oder (ferner) Mehrkomponentenkit (vorzugsweise ein Zweikomponentenkit) mit einer Komponente (A), welche ein oder mehrere radikalisch härtbare Kunstharze (auch als Reaktiv-Kunstharze bezeichnet), insbesondere auf Basis von Vinylester-Urethanharzen wie Urethan(meth)acrylaten beinhaltet, wie oben und unten beschrieben, und den jeweils zugehörigen Härter als Komponente (B) wie oben und nachfolgend definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise ineinander verschachtelte Patronen, wie Ampullen; sowie insbesondere Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäßen Kunstharz-Befestigungssystems mit oben und nachstehend genannten Zusammensetzungen zur Aufbewahrung vor der Nutzung enthalten sind, wobei vorzugsweise auch ein Statikmischer zum entsprechenden Kit gehört.

Die erfindungsgemäßen Kunstharz-Befestigungssystemen (vorzugsweise können folglich vorzugsweise als Zwei- oder Mehr-Komponentensysteme (Mehrkomponentenkit) vorgesehen sein und auch verwendet werden. Zweikomponentige Systeme können auch solche sein, die eine Komponente z.B. in verkapselter Form in der anderen Komponente beinhalten.

Insbesondere handelt es sich bei den Kunstharz-Befestigungssystemen um Zwei-Komponentensysteme, in denen das Gewichts-verhältnis von Komponente A zu Komponente B bei 99 : 1 bis 1 : 99, bei 99 : 1 bis 50 : 50, bei 99 : 1 bis 60 : 40 oder bei 30 : 70 bis 70 : 30 liegt.

Die Verwendung eines erfindungsgemäßen Kunstharz-Befestigungssystem am gewünschten Einsatzort oder das Verfahren unter dieser Verwendung erfolgt insbesondere durch Mischen der zugehörigen (vor Mischung reaktionshemmend separierten) Komponenten, insbesondere nahe bei und/oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Die Einbringung (Einklebung) des oder der Verankerungsmittel(s) erfolgt vorzugsweise bereits kurze Zeit, z.B. 30 Minuten oder weniger, nach dem Mischen der Komponenten des erfindungsgemäßen Kunstharz-Befestigungssystems. Mit der Mischung und Einbringung der Komponenten beginnen mehrere, im Wesentlichen parallel und/oder nur mit geringer zeitlicher Versetzung ablaufende Reaktionen. Die endgültige Aushärtung erfolgt in situ.

Unter "Einkleben" ist insbesondere eine (stoff- und/oder formschlüssige) Befestigung von Verankerungsmitteln aus Metall (worunter z.B. Hinterschneidanker, Gewindestangen, Schrauben, Bohranker, Bolzen zu verstehen sind) oder ferner aus einem anderen Material, wie Kunststoff oder Holz, in festen (vorzugsweise bereits als solche fertiggestellten) Substraten, wie Beton oder Mauer-werk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassadenelemente oder andere Bauelemente befestigt werden.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Bestandteilen.

Unter Bausubstrat sind z.B. Materialien für Wände, Decken oder Böden im Baubereich zu verstehen, z.B. Mauerwerk, Beton, oder ferner Holz, Metall oder ferner Kunststoff.

Die Erfindung betrifft auch die in den unabhängigen und insbesondere in den abhängigen Ansprüchen genannten Erfindungsgegenstände, die hier vorzugsweise als in die Beschreibung durch Bezugnahme aufgenommen anzusehen sind.

Beispiele:

Die nachfolgenden Beispiele dienen der Illustration der Erfindung, ohne ihren Umfang einzuschränken, stellen jedoch auch Ausführungsformen der Erfindung dar.

Experimentelles

Auszugsversuche aus Beton

Für Auszugsversuche mit Gewindestangen M12 wird, gemäß ETAG 001 PART 5 (Herausgeber DIBt, Berlin, Version von 2008), wie folgt vorgegangen:
Zunächst werden Bohrlöcher (Durchmesser 14 mm; Tiefe 84 mm) in einen horizontal liegenden Betonprüfkörper (Betontyp C20/25) mit einem Bohrhammer eingebracht. Die Bohrlöcher werden gemäß Tabelle 1 mit einem Handausbläser und einer Handbürste gereinigt.

Anschließend werden die Bohrlöcher mit dem jeweiligen zu prüfenden härtbaren Kunstharz-Befestigungssystem zu zwei Dritteln befüllt. Je Bohrloch wird eine Gewindestange von Hand eingedrückt. Der Mörtelüberschuss wird mittels eines Spachtels entfernt. Nach den in Tabelle 1 aufgeführten Aushärtebedingungen wird die Gewindestange bis zum Versagen gezogen und die Versagenslast bestimmt.

Tabelle 1: unterschiedliche Versuchsbedingungen der Auszugsversuche

| Bezeichnung | Aushärtezeit [h] | Temperatur [°C] | Reinigung |
|---|---|---|---|
| R1 | 1 | RT | 2 x A 2 x B 2 x A |
| B04 | 24 | -5 | 2 x A 2 x B 2 x A |
| B07 | 24 | RT | 1 x A 1 x B 1 x A |

Bestimmung der Viskosität

Die Viskosität wird mittels eines Brookfield Rotationsviskosimeter mit Spindel 3 bei 23 °C und bei 20 Umdrehungen pro Minute bestimmt (Newton-Bedingungen).

Allgemeine Arbeitsvorschrift I: Synthese Urethanmethacrylatharze

In einem 500 mL Glaskolben mit Rückflusskühler mit Trockenrohr, Rührer, Tropftrichter und Thermometer werden - in den in Tabelle 3 (Beispiel 1) genannten Mengen - HPMA oder GLYFOMA und HPMA zusammen mit Additiven (Katalysatoren und Stabilisatoren) vorgelegt und im Ölbad auf 60 °C aufgeheizt. Polymeres Methylendiphenyldiisocyanat ("PMDI") wird so langsam zur Reaktionsmischung zugetropft, dass die Temperatur nicht über 80 °C ansteigt. Nach vollständiger Zugabe des "PMDI" wird bei 80 °C nachgerührt, um die Reaktion zu vervollständigen. Die vollständige Umsetzung (Freiheit von durch IR-Spektroskopie nachweisbaren Isocyanatgruppen) wird mittels FT-IR überprüft.
Zur Herstellung der nachfolgenden Beispielformulierungen werden folgende Bestandteile und Abkürzungen verwendet.

Tabelle 2: verwendete Bestandteile und Abkürzungen

| Abkürzung | Bezeichnung |
|---|---|
| A | Ausbürsten |
| B | Blasen |
| R1 | ungerissener Beton C20/25 (genaue Bedingungen siehe Tabelle 1) |
| B04 | Min. Installationstemperatur (genaue Bedingungen siehe Tabelle 1) |
| B07 | ungerissener, feuchter Beton C20/25 (genaue Bedingungen siehe Tabelle 1) |
| RT | Raumtemperatur (22 ± 2°C) |
| Ref | Referenz |

(fortgesetzt)

| Abkürzung | Bezeichnung |
|---|---|
| HPMA | 2-Hydroxypropylmethacrylat |
| PMDI | polymeres MDI |
| MDI | Diphenylmethandiisocyanat |
| UMA | Urethanmethacrylat |
| UM-Harz | Urethanmethacrylat-Harz |
| GLYFOMA | Glycerinformalmethacrylat |
| RV | Reaktivverdünner |
| Var. | Variationskoeffizient |

Beispiel 1: Synthese Urethanmethacrylatharze in Mischung mit Reaktivverdünner

Gemäß der Allgemeinen Arbeitsvorschrift I werden Urethanmethacrylatharze synthetisiert. Das Referenzbeispiel 1 (Ref 1) verwendet HPMA sowohl als Reaktionspartner für das PMDI als auch als Reaktivverdünner, derart, dass nach beendeter Synthese ein Überschuss von 44,90 % HPMA vorliegt. In Beispiel B1 dient HPMA als Reaktionspartner für das PMDI (mit 10% Überschuss), der übrige Reaktivverdünneranteil (34,9 %) wird durch den erfindungsgemäßen Reaktivverdünner GLYFOMA ersetzt.

Tabelle 3 zeigt die Endzusammensetzung sowie die ermittelten Viskositäten der synthetisierten Urethanmethacrylatharze.

Tabelle 3: Zusammensetzungen in Gew.% der Urethanmethacrylatharze und Viskositäten

| | Ref 1 | B 1 |
|---|---|---|
| UMA | 55,06 | 55,06 |
| HPMA | 44,90 | 10,00 |
| GLYFOMA | - | 34,90 |
| Additive | 0,04 | 0,04 |
| Viskosität [mPas] | 1390 | 1230 |

Aus Tabelle 3 ist ersichtlich, dass unter Verwendung des erfindungsgemäßen Reaktivverdünners GLYFOMA selbst bei geringerer molarer Gesamtmenge an Reaktivverdünner als im Referenzbeispiel) ein Urethanmethacrylatharz geringerer Viskosität als mit HPMA im Referenzbeispiel erhalten wird. Um dieses Urethanmethacrylatharz als gefülltes Kunstharz-Befestigungssystem zu formulieren sind folglich bei gleicher Urethanmethacrylatmenge (Masse) geringere Reaktivverdünneranteile nötig, um eine vergleichbare Viskosität wie mit HPMA zu erzielen, und/oder es sind höhere Anteile an Urethanmethacrylatharz als leistungsfähigem Kunstharz bei gleichbleibender Reaktivverdünnermenge möglich. Wie eingangs beschrieben führt beides zu höheren und homogeneren Lastwerten.

Beispiel 2: Viskositätserniedrigende Wirkung des erfindungsgemäßen Reaktivverdünners

Um die stärker ausgeprägte viskositätserniedrigende Wirkung des erfindungsgemäßen Reaktivverdünners aufzuzeigen, wird ein Urethanmethacrylatharz, mit einer Basisviskosität von 985 mPas mit unterschiedlichen Anteilen des erfindungsgemäßen Reaktivverdünners und des vergleichbaren monofunktionellen Reaktivverdünners HPMA verdünnt. Die Tabelle 4 verdeutlicht die stärker viskositätssenkende Wirkung.

Tabelle 4: Reaktivverdünnerkonzentrationen und ermittelte Viskositäten der resultierenden Urethanmethacrylatharze (UM-Harze)

| Konzentration RV [%] | Viskosität mit HPMA (Ref) (mPas) | Viskosität mit GLYFOMA (mPas) |
|---|---|---|
| 0 | 985 | 985 |

(fortgesetzt)

| Konzentration RV [%] | Viskosität mit HPMA (Ref) (mPas) | Viskosität mit GLYFOMA (mPas) |
|---|---|---|
| 10 | 460 | 455 |
| 20 | 235 | 220 |
| 30 | 125 | 115 |
| 50 | 40 | 30 |

Aus Tabelle 4 geht hervor, dass der erfindungsgemäße Reaktivverdünner im direkten Vergleich mit einem anderen monofunktionellen Reaktivverdünner eine stärker viskositätserniedrigende Wirkung hat.

Die Beispiele 1 und 2 belegen, dass mit dem erfindungsgemäßen Reaktivverdünner einerseits insgesamt niedrigviskosere Urethanmethacrylatharze hergestellt werden können, andererseits auch bestehende Urethanmethacrylatharze bei jeweils gleichen Reaktivverdünnergehalten (Masse) mit GLYFOMA stärker in ihrer Viskosität verringert werden können. Dementsprechend sind unter Verwendung des erfindungsgemäßen Reaktivverdünners weniger Reaktivverdünneranteile notwendig, um eine geeignete Viskosität einzustellen. Hierdurch kann der leistungsfähige Kunstharzanteil (Urethanmethacrylat) bei gleicher Viskosität erhöht werden.

Beispiel 3: Auszugswerte aus Beton

Um aufzuzeigen, dass mit dem erfindungsgemäßen Reaktivverdünner robustere Kunstharz-Befestigungssysteme formuliert werden können und auch deutlich homogenere und reproduzierbarere Lastwerte erreicht werden, werden unterschiedliche Arten an Auszugsversuchen aus Beton durchgeführt. Diese unterschiedlichen Arten an Auszugsversuchen aus Beton sollen die kritischsten Baustellenbedingungen simulieren. Die Tabelle 5 zeigt die Zusammensetzungen der formulierten Kunstharz-Befestigungssysteme und die Tabelle 6 gibt die ermittelten Verbundspannungen, sowie deren Variationskoeffizienten wieder.

Tabelle 5: Zusammensetzung der Kunstharz-Befestigungssysteme

| | GLYFOMA [Gew.%] | HPMA [Gew.%] |
|---|---|---|
| UM-Harz aus B 1 | 33,7 | - |
| UM-Harz aus Ref 1 | - | 33,7 |
| GLYFOMA | 5,0 | - |
| HPMA | - | 5,0 |
| Inhibitor | 0,1 | 0,1 |
| Beschleuniger | 0,5 | 0,5 |
| Füllstoffe | 58,1 | 58,1 |
| Additive | 0,5 | 0,5 |
| Thixotropiermittel | 2,1 | 2,1 |

Als Härter für die in Tabelle 5 beschriebenen Kunstharz-Befestigungssysteme wird eine wässrige Härterformulierung mit einem Füllstoffgehalt von 56,6 Gew.% verwendet. Der Peroxidgehalt der Härterformulierung beträgt 14 Gew.%.

Tabelle 6: Ermittelte Verbundspannungen und Variationskoeffizienten

| | GLYFOMA | | HPMA | |
|---|---|---|---|---|
| | T GLYFOMA [N/mm$^2$] | Var. [%] | T HPMA [N/mm$^2$] | Var. [%9 |
| R1 | 22,6 | 2,3 | 20,4 | 2,2 |
| B04 | 24,0 | 2,3 | 23,7 | 6,2 |
| B07 | 21,6 | 4,3 | 19,5 | 12,9 |

(fortgesetzt)

| | GLYFOMA | | HPMA | |
|---|---|---|---|---|
| | T GLYFOMA [N/mm$^2$] | Var. [%] | T HPMA [N/mm$^2$] | Var. [%9 |
| Var. (R1,B04,B07) [%] | 5,3 | | 10,4 | |

Die ermittelten Ergebnisse aus Tabelle 6 bestätigen, dass mit dem erfindungsgemäßen Reaktivverdünner höhere Verbundspannungen bei deutlich geringerer Streuung der Messwerte erzielt werden. Bei einem robusten Kunstharz-Befestigungssystem sollten jedoch nicht nur die Ergebnisse innerhalb einer Versuchsserie eine geringe Streuung aufweisen, sondern auch die Ergebnisse der unterschiedlichen Versuchsserien möglichst konstant sein. Dies zeigt die Angabe der Variationskoeffizienten Var. (R1 ,B04,B07) (geringere Streuung mit GLYFOMA als mit HPMA) der Tabelle 6. Der Variationskoeffizient Var. (R1,B04,B07) über alle Versuche belegt, dass die Kunstharz-Befestigungssysteme, welche den erfindungsgemäßen Reaktivverdünner beinhalten, konstantere Verbundspannungen auch innerhalb den unterschiedlichen Versuchsarten erzielen.

**Patentansprüche**

1. Kunstharz-Befestigungssystem für die chemische Befestigungstechnik, welches ein radikalisch härtbares Kunstharz, das einen radikalisch härtbaren Reaktivverdünner umfasst, und einen Radikalinitiator beinhaltet, **dadurch gekennzeichnet, dass** es Glycerinformalmethacrylat als monofunktionellen Reaktivverdünner umfasst.

2. Kunstharz-Befestigungssystem nach Anspruch 1, wobei es sich bei dem radikalisch härtbaren Kunstharz um ein solches handelt, welches Styrol und Derivate; Vinylester, wie (Meth)Acrylate, Urethan(meth)acrylate oder Itaconate, oder Epoxy(meth)acrylate; ungesättigte Polyester, Vinylether, Allylether, Dicyclopentadien-Verbindungen und ungesättigte Fette, umfasst.

3. Kunstharz-Befestigungssystem nach Anspruch 1, wobei es sich bei dem radikalisch härtbaren Kunstharz um ein Urethan(meth)acrylat handelt.

4. Kunstharz-Befestigungssystem nach einem der Ansprüche 1 bis 3, **dadurch gekennzeichnet, dass** es sich um ein Mehrkomponentenkit, insbesondere ein Zweikomponentenkit mit einer Komponente (A), welche ein radikalisch härtbares Kunstharz beinhaltet, und mit einer Komponente (B), die einen Härter beinhaltet, handelt, wobei es sich bei dem Zweikomponentenkit vorzugsweise um eine Zweikammerkartusche, insbesondere mit Statikmischer, handelt..

5. Kunstharz-Befestigungssystem nach einem der Ansprüche 1 bis 4, in dem der Anteil des Glycerinformalmethacrylats bei 0,1 bis 70 Gew.-%, insbesondere bei 1 bis 60 Gew.-%, vorzugsweise bei 1 bis 55 Gew.-% liegt.

6. Kunstharz-Befestigungssystem nach einem der Ansprüche 1 bis 5, welches auch weitere Zusätze, insbesondere ausgewählt aus Beschleunigern, Inhibitoren, nicht reaktiven Verdünnern, weiteren reaktiven Verdünnern, Thixotropiermitteln, Füllstoffen und/oder weiteren Additiven, oder Mischungen von zwei oder mehr dieser Inhaltsstoffe, beinhaltet.

7. Kunstharz-Befestigungssystem nach einem der Ansprüche 1 bis 6, welches eingerichtet ist zur Befestigung von Verankerungsmitteln in Bohrlöchern in Bausubstraten.

8. Verwendung eines Kunstharz-Befestigungssystems nach einem der Ansprüche 1 bis 7 zur Befestigung eines Verankerungsmittel in einem Loch, wie einem Spalt oder insbesondere einem Bohrloch, in einem Bausubstrat.

9. Verfahren zur Befestigung eines Verankerungsmittel in einem Loch, wie einem Spalt oder insbesondere einem Bohrloch, in einem Bausubstrat, umfassend die Verwendung gemäß Anspruch 8.

10. Verwendung von Glycerinformalmethacrylat als Reaktivverdünner in einem Kunstharz-Befestigungssystem für die chemische Befestigungstechnik, wobei das Kunstharz-Befestigungssystem ein radikalisch härtbares Kunstharz und einen Radikalinitiator beinhaltet.

**11.** Verwendung von Glycerinformalmethacrylat als monofunktionaler Reaktivverdünner zur Verringerung der Viskosität eines radikalisch härtbaren Kunstharzes für die chemische Befestigungstechnik oder zur Verringerung der Viskosität eines radikalisch härtbaren Kunstharz-Befestigungssystems wie in einem der Ansprüche 1 bis 7 beschrieben, wobei das radikalisch härtbare Kunstharz-Befestigungssystem ein radikalisch härtbares Kunstharz und einen Radikalinitiator beinhaltet.

**12.** Glycerinformalmethacrylat als monofunktionaler Reaktivverdünner in einem Kunstharz-Befestigungssystem für die chemische Befestigungstechnik.

**13.** Verfahren zur Herstellung eines Kunstharz-Befestigungssystems nach einem der Ansprüche 1 bis 7, **dadurch gekennzeichnet, dass** Glycerinformalmethacrylat einem Reaktiv-Kunstharz während dessen Synthese und/oder danach, oder erst bei der Formulierung einer Kunstharzkomponente des Kunstharz-Befestigungssystems, zugesetzt wird.

Europäisches Patentamt
European Patent Office
Office européen des brevets

# EUROPÄISCHER RECHERCHENBERICHT

Nummer der Anmeldung
EP 21 15 9815

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2012 210121 A1 (EVONIK INDUSTRIES AG [DE]) 19. Dezember 2013 (2013-12-19) | 1,2,4-13 | INV. C08G18/67 C08G18/76 C08L75/16 |
| A | * Absatz [0063] * | 3 | |
| | ----- | | |
| X | US 9 862 788 B2 (HILF STEFAN [DE]; KLEIN ALEXANDER [DE] ET AL.) 9. Januar 2018 (2018-01-09) | 1,2,4-13 | |
| A | * Anspruch 1 * | 3 | |
| | ----- | | |
| X | US 2017/107330 A1 (WALTHER BURKHARD [DE] ET AL) 20. April 2017 (2017-04-20) | 1,2,4-13 | |
| A | * Beispiele 1,3 * | 3 | |
| | ----- | | |
| X | WO 2015/091318 A1 (EVONIK INDUSTRIES AG [DE]; HILF STEFAN [SG] ET AL.) 25. Juni 2015 (2015-06-25) | 1,2,4-13 | |
| A | * Seite 13 * | 3 | |
| | ----- | | |

RECHERCHIERTE SACHGEBIETE (IPC)
C08G
C08L

Der vorliegende Recherchenbericht wurde für alle Patentansprüche erstellt

2

| Recherchenort | Abschlußdatum der Recherche | Prüfer |
|---|---|---|
| München | 27. Juli 2021 | Bergmeier, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 21 15 9815

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-07-2021

| Im Recherchenbericht angeführtes Patentdokument | Datum der Veröffentlichung | Mitglied(er) der Patentfamilie | Datum der Veröffentlichung |
|---|---|---|---|
| DE 102012210121 A1 | 19-12-2013 | DE 102012210121 A1 | 19-12-2013 |
| | | EP 2861661 A1 | 22-04-2015 |
| | | WO 2013185993 A1 | 19-12-2013 |
| US 9862788 B2 | 09-01-2018 | AR 087430 A1 | 26-03-2014 |
| | | AU 2012292352 A1 | 09-01-2014 |
| | | BR 112014000788 A2 | 14-02-2017 |
| | | CA 2843484 A1 | 07-02-2013 |
| | | CN 103649194 A | 19-03-2014 |
| | | DE 102011109139 A1 | 07-02-2013 |
| | | DK 2739677 T3 | 24-08-2015 |
| | | EP 2739677 A1 | 11-06-2014 |
| | | ES 2544305 T3 | 28-08-2015 |
| | | HK 1194412 A1 | 17-10-2014 |
| | | JP 2014528005 A | 23-10-2014 |
| | | KR 20140047678 A | 22-04-2014 |
| | | NZ 618667 A | 26-06-2015 |
| | | PL 2739677 T3 | 30-10-2015 |
| | | RU 2014107764 A | 20-09-2015 |
| | | SI 2739677 T1 | 30-09-2015 |
| | | TW 201323540 A | 16-06-2013 |
| | | US 2014128536 A1 | 08-05-2014 |
| | | WO 2013017350 A1 | 07-02-2013 |
| US 2017107330 A1 | 20-04-2017 | AU 2015206131 A1 | 04-08-2016 |
| | | CA 2936944 A1 | 23-07-2015 |
| | | CN 105916911 A | 31-08-2016 |
| | | EP 2896644 A1 | 22-07-2015 |
| | | EP 3097137 A1 | 30-11-2016 |
| | | JP 2017503895 A | 02-02-2017 |
| | | US 2017107330 A1 | 20-04-2017 |
| | | WO 2015107002 A1 | 23-07-2015 |
| WO 2015091318 A1 | 25-06-2015 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3940138 A1
- DE 102014103923 A1
- DE 3940309 A1
- DE 4111828 A1
- EP 0508183 A1
- EP 0432087 A1
- DE 19956509
- DE 102014109355 A1
- DE 102013114061 A1
- DE 102015003221 A1
- WO 2016206777 A1


### In der Beschreibung aufgeführte Nicht-Patentliteratur


- **VON BECKER, G.W. ; BRAUN, D. ; OERTEL, G.** Polyurethane Kunststoff-Handbuch. Carl Hanser Verlag, 1993, vol. 7